# DEMANDE DE BREVET EUROPEEN

(11) **EP 1 832 514 A1**
(43) Date de publication de la demande: **12.09.2007**
(21) Numéro de dépôt: 07290274.5
(22) Date de dépôt: 05.03.2007
(51) Int. Cl.: B65B 7/16

(54) **Procédé et machine de formage et de thermoscellage d'un film plastique sur un article tel qu'une boite stérile pour la culture de micro-organismes, et article ainsi obtenu**

(30) Priorité: 07.03.2006 FR 0602022
(71) Demandeur: Etablissements Streb & Weil, 67120 Duttlenheim (FR)
(72) Inventeur: Weil, Michel, 67120 Molsheim (FR)
(74) Mandataire: Bezault, Jean

(57) **Abrégé**

L'article (10) comporte une région centrale (12) avec, en retrait, un rebord (32) comportant un méplat périphérique (14) sur lequel est scellé à chaud le film (40). Le film utilisé est un film plastique étirable à froid, et le procédé comporte notamment une étape de maintien périphérique et de déplacement axial du film par rapport à la pièce, au-delà de la région centrale en étirant le film dans la région du rebord sans apport extérieur substantiel de chaleur. Le film est ainsi conformé à froid pour lui donner une forme concave avec des zones (42-48) conjuguées de la région centrale (12) et du rebord (32) de l'article. Le film est ensuite maintenu au contact du méplat, l'ensemble étant simultanément chauffé pour opérer le thermoscellage.

## Description

L'invention concerne le formage et le thermoscellage d'un film plastique sur un article plat.

Elle s'applique tout particulièrement à des articles constitués de boîtes stériles pour la culture de micro-organismes.

Ces boîtes stériles, qui sont décrites par exemples dans les FR-A-2 819 523 et FR-A-2 833 608, se présentent sous la forme d'un récipient plat fermé par un couvercle et apte à contenir un milieu de culture, typiquement un milieu gélosé. Les boîtes de ce type, fréquemment appelées boîtes de Pétri, sont généralement en matière plastique injectée. Elles sont de préférence transparentes afin de permettre l'examen visuel du milieu de culture et, avant leur utilisation, l'intégrité de ce milieu : si la stérilité n'a pas été maintenue, des germes se seront développés sur le milieu de culture, qui pourront être détectés à l'oeil nu.

Ces boîtes ne sont pas étanches en elles-mêmes, le couvercle étant simplement posé sur le récipient. De ce fait, avant leur utilisation, elles doivent être conditionnées de manière étanche et stérile pour éviter toute contamination microbienne.

Ce conditionnement peut être notamment réalisé, comme exposé dans les deux documents précités, au moyen d'un film plastique thermoscellé sur un méplat du pourtour du couvercle, ce qui permet de fermer hermétiquement la boîte en enveloppant le récipient sans rompre la transparence au travers de la paroi du couvercle.

En pratique, il existe en direction axiale un décalage de niveau entre le fond du récipient et le pourtour du couvercle où est scellé le film. Du fait de cette différence de niveau, une fois le produit conditionné, le film n'est pas plan, mais il affecte une forme tronconique (dans le cas d'un récipient de forme circulaire) entourant une partie centrale plane. En d'autres termes, pour conditionner ce type d'article il est nécessaire de donner une forme concave à l'opercule de fermeture en déformant le film pour lui donner une forme appropriée, non plane.

Jusqu'à présent, cette opération est réalisée par thermoformage du film préalablement enduit de sa couche adhésive. L'opération suivante consiste à mettre l'opercule ainsi formé au contact de l'article en matière plastique destiné à le recevoir, puis à appliquer l'outil chauffant de thermoscellage, en s'assurant que l'article et l'opercule conformé sont bien alignés, enfin à appliquer une pression afin que l'agent de scellage de la couche adhésive du film fusionne avec le plastique de l'article.

Cette technique présente l'inconvénient de nécessiter deux outillages distincts, à savoir un outillage de thermoformage pour donner la forme concave au film plastique de l'opercule, et un outillage de thermoscellage pour souder l'opercule sur l'article.

La mise en oeuvre de cette technique nécessite en outre de prendre un certain nombre de précautions, notamment au moment du thermoformage, pour éviter de détériorer l'aspect et la transparence du film dans sa partie centrale plane pour que l'utilisateur puisse, plus tard, s'assurer avant la première utilisation que le milieu est bien resté stérile.

L'un des buts de l'invention est de proposer une technique qui permette, tout en garantissant l'étanchéité et la stérilité, de donner une forme non plane au film en s'affranchissant des difficultés rencontrées avec la technique antérieure combinant un outillage de thermoformage et un outillage de thermoscellage.

On notera que l'invention n'est en aucune façon limitée au conditionnement des boîtes pour la culture de micro-organismes, ni même au conditionnement des boîtes présentant une forme circulaire, mais peut être appliquée avantageusement à tous types d'articles fermés par un opercule thermoscellé sur un rebord de l'article, dès lors qu'existe un décalage de niveaux entre ce rebord, où est thermoscellé l'opercule, et la partie centrale de l'article, recouverte par l'opercule.

Le procédé de l'invention est du type général connu consistant à former un film plastique et à thermosceller ce film sur le pourtour d'un article présentant, du côté recouvert par le film, une région centrale entourée par un rebord comportant un méplat périphérique sur lequel est scellé à chaud le film, ce méplat s'étendant en retrait axial par rapport au plan de la région centrale, le procédé comportant les étapes consistant à conformer au préalable le film pour lui donner une forme concave avec des zones conjuguées de la région centrale et du rebord de l'article, puis sceller thermiquement le film sur l'article, au moins sur la région du méplat périphérique.

De façon caractéristique de l'invention, le film utilisé est un film plastique étirable à froid et le procédé comporte les étapes consistant à :
a) présenter le film, à l'état non étiré, au-dessus de la région centrale de l'article,
b) maintenir périphériquement le film autour du méplat et déplacer axialement le film par rapport à la pièce de manière à rapprocher le film de la région centrale jusqu'à ce que le film vienne en contact avec cette région centrale,
c) poursuivre ce déplacement axial au-delà de la région centrale en étirant le film dans la région du rebord située entre la région centrale et le méplat périphérique, sans apport extérieur substantiel de chaleur,
d) maintenir le film au contact du méplat périphérique et simultanément chauffer film et méplat à une température suffisante pour opérer leur solidarisation mutuelle par thermoscellage, et
e) libérer l'article recouvert du film thermoscellé.

En d'autres termes, essentiellement, l'invention propose de remplacer le thermoformage des procédés antérieurs par une étape de déformation à froid sous contrainte d'un film qui, normalement, n'est pas déformable. Ce formage à froid est obtenu par pénétration sous pression de l'article dans le film qui va ainsi s'étirer. Ensuite intervient le scellage thermique du film sur l'article. Les deux opérations peuvent être réalisées sur un seul et même poste, ce qui permet d'augmenter encore la cadence de la ligne de conditionnement.

La mise en oeuvre de l'invention procure un nombre important d'avantages, notamment elle permet :
- de conserver la parfaite transparence du film, celui-ci étant déformé à froid donc de manière parfaitement contrôlable,
- d'obtenir une parfaite concentricité de l'article à conditionner par rapport à l'opercule constitué par le film préformé lors du thermoscellage de ces deux pièces, puisque les différentes opérations sont réalisées au cours de cycles successifs exécutés sur une même machine sans transfert des pièces,
- d'obtenir, du fait de la déformation à froid, une pré-tension de l'opercule qui de ce fait maintiendra la boîte bien fermée en plaquant le couvercle contre le récipient,
- de choisir un film multicouche d'un type différent de celui des films thermoformables utilisés auparavant, par exemple de choisir un complexe PET/PE dont les propriétés d'étanchéité et de transparence seront supérieures à celles des films thermoformables monocouche actuellement utilisés.

Très avantageusement, l'étape d) comprend également le chauffage de l'intervalle compris entre la région centrale et le méplat périphérique à une température suffisante pour tendre la partie de film s'étendant librement dans cet intervalle.

Si nécessaire, l'étape e) est suivie d'une étape de découpe du film autour de l'article pourvu du film thermoscellé.

L'invention propose également une machine pour la mise en oeuvre du procédé exposé ci-dessus.

Une telle machine comporte, de manière en elle-même connue, des moyens pour conformer au préalable le film en une forme concave avec des zones conjuguées de la région centrale et du rebord de l'article, et des moyens pour sceller thermiquement le film sur l'article, au moins sur la région du méplat périphérique.

De façon caractéristique de l'invention, la machine comprend un poste unique comportant :
a) un support pour l'article,
b) des moyens de placement du film, à l'état non étiré, au-dessus de la région centrale de l'article,
c) des moyens de maintien périphérique du film autour du méplat de l'article dans son support,
d) des moyens pour déplacer axialement le film par rapport à la pièce, propres à rapprocher le film de la région centrale jusqu'à ce que le film vienne en contact avec cette région centrale puis au-delà de la région centrale, en étirant le film dans la région du rebord située entre la région centrale et le méplat périphérique, sans apport extérieur substantiel de chaleur,
e) des moyens de thermoscellage, propres à maintenir le film au contact du méplat périphérique et simultanément chauffer film et méplat à une température suffisante pour opérer leur solidarisation mutuelle par thermoscellage, et
f) des moyens pour libérer hors de son support l'article recouvert du film thermoscellé.

Très avantageusement, il est également prévu des moyens de chauffage de l'intervalle compris entre la région centrale et le méplat périphérique à une température suffisante pour tendre la partie de film s'étendant librement dans cet intervalle.

Si nécessaire, il peut être prévu des moyens de découpe du film autour de l'article pourvu du film thermoscellé.

L'invention propose également, en tant que produit nouveau, un article du type exposé plus haut, c'est-à-dire un article recouvert d'un film thermoscellé sur son pourtour et présentant, du côté recouvert par le film, une région centrale entourée par un rebord comportant un méplat périphérique sur lequel est scellé le film, ce méplat s'étendant en retrait axial par rapport au plan de la région centrale, et le film étant un film plastique conformé pour lui donner une forme concave avec des zones conjuguées de la région centrale et du rebord de l'article.

De façon caractéristique de l'invention, le matériau du film thermoscellé est une matière plastique étirable à froid.

La mise en oeuvre de l'invention permet en particulier, comme on l'a souligné plus haut, de choisir pour le film une matière plastique non thermofusible, notamment un complexe multicouche tel qu'un complexe PET/PE dont les propriétés d'étanchéité et de transparence sont supérieures à celles des films thermoformables monocouche actuellement utilisés.

Très avantageusement, la partie de film s'étendant librement dans l'intervalle compris entre la région centrale et le méplat périphérique est une partie sous tension. En effet, l'application de la chaleur au moment du thermoscellage permet d'assurer non seulement la fusion de l'agent de scellage, mais aussi l'élimination des plis pouvant se former dans le film, notamment dans la partie tronconique : le rayonnement thermique de l'outil de scellage permet en effet de libérer les tensions d'étirement du film sans altérer sa transparence et ses propriétés de résistance et d'étanchéité.

On va maintenant décrire plus en détail la mise en oeuvre du procédé de l'invention, en référence aux figures annexées, où les mêmes références numériques désignent d'une figure à l'autre des éléments identiques et où :
- la figure 1 illustre les différents éléments tels qu'ils se présentent en début de cycle ;
- la figure 2 illustre l'étape de pinçage du film ;
- la figure 3 illustre l'étape d'étirement à froid du film ;
- la figure 4 illustre l'étape de thermoscellage ;
- la figure 5 est une vue agrandie partielle, correspondant au détail repéré V sur la figure 4 ;
- la figure 6 illustre l'étape de refroidissement après scellage ;
- La figure 7 illustre l'étape finale d'ouverture et d'extraction de l'article conditionné, en fin de cycle.

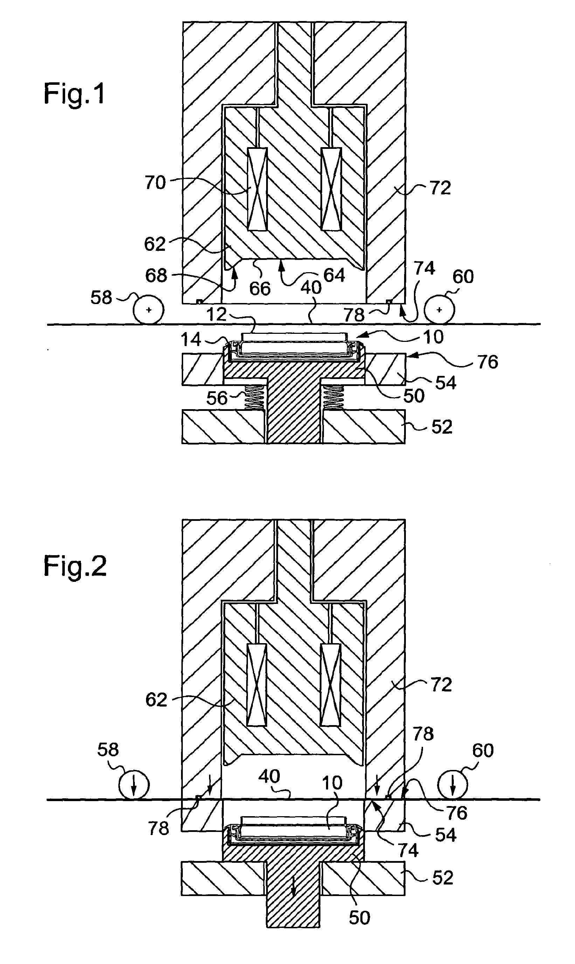

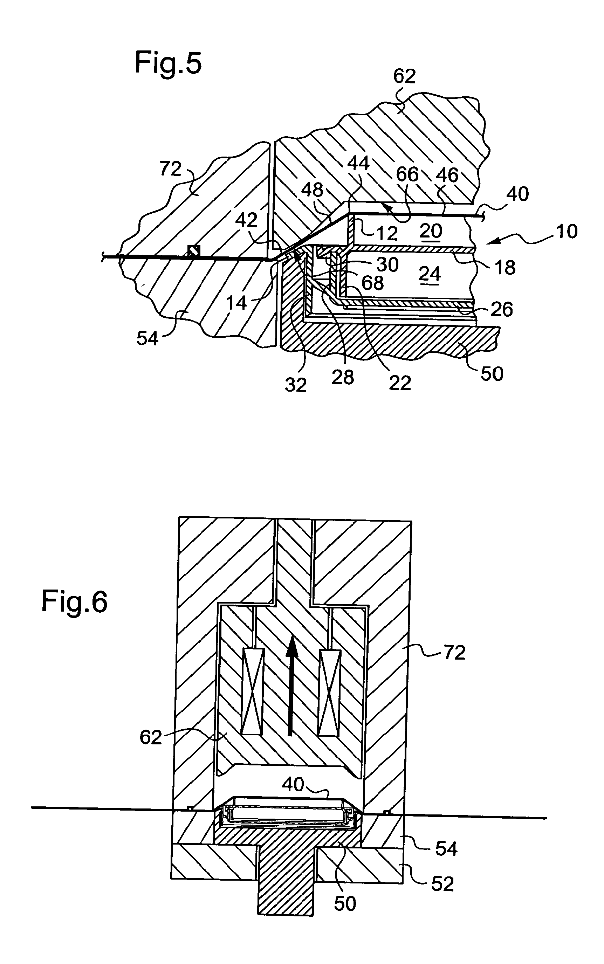

On va tout d'abord décrire l'article à conditionner, en référence à la figure 1 et à la vue agrandie de la figure 5.

Dans l'exemple illustré, l'article 10 est une boîte stérile pour la culture de micro-organismes du type boîte de Pétri, comprenant un récipient fermé par un couvercle. Cette boîte est présentée en position retournée, c'est-à-dire avec le fond du récipient tourné vers le haut et le couvercle vers le bas.

Le fond du récipient comprend une paroi cylindrique périphérique 12 définissant une région centrale couverte par un film d'operculage scellé sur un méplat périphérique 14 du couvercle. Dans le cas de l'invention, ce méplat périphérique 14 est situé axialement en retrait par rapport au plan de la région centrale du récipient. Le récipient comporte une paroi de fond 18 qui définit avec la paroi cylindrique 12 un premier volume 20 qui peut être laissé libre, ou bien utilisé pour recevoir par exemple un filtre ou tout autre accessoire. La hauteur de la paroi cylindrique 12 peut varier en fonction des utilisations. Elle peut même être très faible, voire nulle, lorsque la présence d'un premier volume 20 n'est pas nécessaire.

À l'opposé de la paroi cylindrique 12, la paroi de fond 18 est prolongée par une autre paroi cylindrique 22 définissant un second volume 24 contenant le milieu de culture gélosé. Le volume 24 est fermé par la face centrale 26 du couvercle.

Le couvercle est de diamètre plus grand que le récipient et il déborde donc en périphérie de ce dernier, avec notamment deux parois latérales cylindriques concentriques, à savoir une première paroi 28 venant en appui contre le rebord 30 du récipient, et une seconde paroi 32 prolongée latéralement vers l'extérieur par le méplat 14. Ce méplat 14 est de préférence incliné par rapport au plan radial, de manière à affecter une forme tronconique correspondant approximativement à un cône inscrit dans le cercle défini par le haut du rebord cylindrique 12 du récipient.

Le conditionnement de cette boîte consiste à appliquer sur sa face antérieure (côté fond, à l'opposé du couvercle) un opercule constitué d'un film 40 solidarisé au couvercle par thermoscellage sur le méplat périphérique 14.

Du fait du retrait du méplat par rapport à la face centrale de la boîte, le film une fois mis en place viendra appuyer en 44 contre le sommet de la paroi périphérique 12, ce qui aura pour effet de plaquer l'un contre l'autre couvercle et récipient, assurant ainsi une fermeture étanche et stérile jusqu'au retrait de l'opercule. La partie 46 du film située dans la région centrale autour de la paroi 12 est simplement tendue, ce qui permet notamment de préserver les propriétés de transparence à cet endroit.

La configuration que l'on vient de décrire impose au film de présenter une région inclinée 48 entre l'extrémité de la paroi 12 et le méplat 14, en d'autre termes une configuration concave.

Il est donc nécessaire de donner préalablement au film une forme non plane en assurant sa tension, en garantissant l'étanchéité et la stérilité, et en conservant les propriétés de transparence pour que l'utilisateur puisse s'assurer que le milieu est bien resté stérile.

L'invention propose d'utiliser pour ce film un film multicouche, par exemple un complexe PET/PE muni d'un agent de scellage fusible à chaud, ce film étant en un matériau qui normalement n'est pas librement déformable, en lieu et place des films thermoformables précédemment utilisés qui présentent des propriétés moindres d'étanchéité et de transparence. Le film comporte de plus à sa surface un agent de scellage fusible à chaud, appliqué soit sur toute la surface du film, soit seulement sur une partie du film correspondant à la partie scellée, c'est-à-dire la région du méplat 14.

L'opération de formage sera réalisée à froid, c'est-à-dire à une température voisine de la température ambiante, au moyen de la machine que l'on va maintenant décrire.

Cette machine comporte, au-dessous du ruban de film 40, un support 50 recevant la pièce à conditionner. Ce support est un support escamotable, mobile axialement vers le bas par rapport à un plateau fixe 52. Le support escamotable 50 est également entouré d'un serre-flan rétractable 54 mobile axialement vers le bas. Des ressorts 56 sont interposés entre le serre-flan 54 et le plateau fixe 52.

Le ruban de film 40 est entraîné par des rouleaux 58, 60 placés de part et d'autre du support 50. Ces rouleaux 58, 60 sont également mobiles en direction verticale, de manière coordonnée, pour abaisser le plan du film 40 par rapport au support escamotable 50, comme on le décrira plus bas. la machine comporte également, dans la région située au-dessus du film 40, un tête de scellage chauffante mobile 62 présentant une face inférieure 64 concave, avec une partie centrale 66 plane et une partie périphérique inclinée se terminant par un rebord 68 de dimensions et d'inclinaison homologues du méplat 14 de l'article 10. Cette tête de scellage est pourvue de moyens de chauffage 70 tels que des résistances électriques ou un système mettant en oeuvre un fluide chaud.

La tête de scellage 62 est mobile en direction verticale par rapport à un support 72 qui est lui-même mobile verticalement vers le bas, sa face inférieure 74 faisant fonction de serre-flan, homologue de la face supérieure 76 du serre-flan rétractable 54 situé au-dessous du film 40. La face 74 porte un joint torique 78 destiné à assurer le pincement du film lors du rapprochement des faces 76 et 78 et à éviter tout glissement transversal du film le long de ces faces.

La configuration initiale de la machine est celle illustrée figure 1 : au-dessus du film 40, la tête de scellage 62 et le support 72 sont en position haute et, au-dessous du film 40, la pièce plastique 12 a été placée sur le support 50, prête à recevoir le film disposé au-dessus pour former l'opercule.

L'étape suivante, illustrée figure 2, est une étape consistant à pincer le film 40 autour de l'article 10, par abaissement simultané du support 50, du support mobile 72 et des rouleaux 58, 60 jusqu'à ce que la face inférieure 74 du support 72 vienne en contact avec la face supérieure 76 du serre-flan rétractable 54. Le film est alors pincé en périphérie par le joint torique 78 dans la région située entre ces deux surfaces 74 et 76.

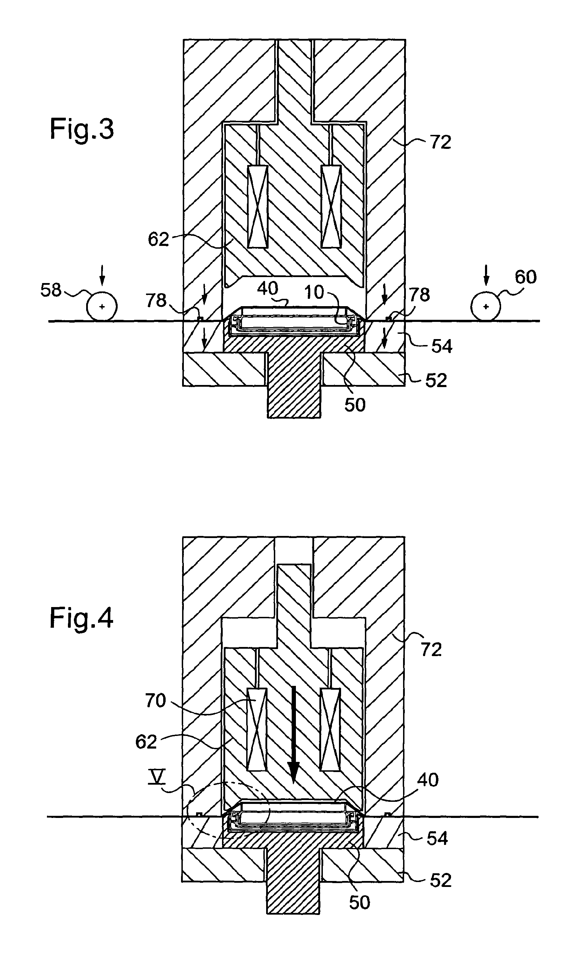

L'étape suivante illustrée figure 3, caractéristique de l'invention, consiste à étirer le film en poursuivant la descente du support mobile 72 sur le serre-flan rétractable 54. Durant cette opération, l'article 10 est maintenu immobile par le support 50 abaissé contre le plateau fixe 52 et il pénètre progressivement dans le film, ce qui a pour effet d'étirer et de former ce dernier. Les rouleaux 50 et 60 se déplacent également vers le bas, de façon coordonnée avec le support mobile 72.

Cette étape est réalisée à température ambiante, c'est-à-dire sans apport de chaleur externe. On notera que, durant cette opération, le film reste pincé autour de l'article 10 notamment par le joint torique 78, ce qui permet l'étirement et évite tout glissement du film.

L'étape suivante, illustrée figure 4, est une étape de thermoscellage, qui est exécutée par descente de la tête de scellage mobile 62 jusqu'à venue en contact de la face périphérique inclinée 68 (figure 5) avec le méplat 14. A titre d'exemple, pour un article en polystyrène injecté avec un méplat 14 d'épaisseur 1 mm s'étendant entre des diamètres 60 et 70 mm et pour un film PET/PE d'épaisseur 6 µm, les paramètres de scellage sont : température 160 à 200°C, durée 1 à 2 secondes et pression de scellage 100 à 120 daN par cm².

On notera que la face inférieure 66 de la tête de scellage 62 (figure 5) est configurée de manière à venir en contact avec le film et avec l'article uniquement dans la région du méplat 14, et qu'elle se situe en retrait dans les autres régions, notamment la région centrale 46 et la région 48 prolongeant la région 46 jusqu'au méplat 14.

En particulier, le rayonnement thermique (sans contact) de la chaleur dans cette région tronconique non soudée 48 permet de supprimer les tensions du film occasionnées localement dans cette région lors de l'étirement et d'éliminer par "repassage" les plis qui auraient pu se former à cet endroit lors de la déformation à froid : le rayonnement permet en effet de libérer localement les tensions d'étirement du film sans altérer sa transparence et ses propriétés de résistance et d'étanchéité.

L'étape suivante, illustrée figure 6, consiste à relever la tête de scellage 62 de manière à refroidir le film. Si celui-ci est refroidi naturellement, il est maintenu pincé pendant une durée typique de l'ordre de 2 à 4 secondes, mais pour augmenter les cadences cette durée peut être réduite par application d'un fluide de refroidissement.

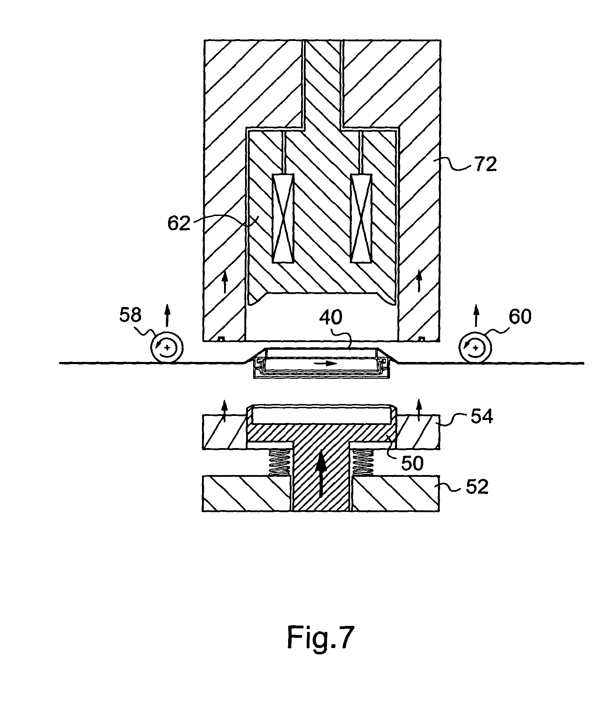

L'étape finale est illustrée figure 7 et correspond à la configuration de fin de cycle, après remontée du support mobile 72 et également du serre-flan rétractable 54 jusqu'en fin de course de celui-ci.

Les rouleaux 58 et 60 sont également déplacés vers le haut, ce qui a pour effet de faire remonter non seulement la bande de film mais également l'article solidarisé au film par le thermoscellage.

Ce mouvement est poursuivi jusqu'à ce que l'article soit libéré de son support 50. Le film est alors avancé latéralement, par rotation des rouleaux 58, 60, jusqu'à extraction hors de la machine de l'article conditionné. Ce dernier sera ensuite individualisé par découpe du film autour du méplat thermosoudé, en formant en même temps une languette de préhension qui facilitera le pelage de l'opercule au moment de l'utilisation.

## Revendications

1. Procédé de formage d'un film plastique (40) et de thermoscellage de ce film sur le pourtour d'un article (10) présentant, du côté recouvert par le film, une région centrale (12) entourée par un rebord (32) comportant un méplat périphérique (14) sur lequel est scellé à chaud le film, ce méplat s'étendant en retrait axial par rapport au plan de la région centrale, ce procédé comportant les étapes consistant à :
- conformer au préalable le film pour lui donner une forme concave avec des zones (42-48) conjuguées de la région centrale (12) et du rebord (32) de l'article, puis
- sceller thermiquement le film sur l'article, au moins sur la région du méplat périphérique,
**caractérisé en ce que** le film utilisé est un film plastique étirable à froid, et **en ce que** le procédé comporte les étapes consistant à :
a) présenter le film, à l'état non étiré, au-dessus de la région centrale de l'article,
b) maintenir périphériquement le film autour du méplat et déplacer axialement le film par rapport à la pièce de manière à rapprocher le film de la région centrale jusqu' à ce que le film vienne en contact avec cette région centrale,
c) poursuivre ce déplacement axial au-delà de la région centrale en étirant le film dans la région du rebord située entre la région centrale et le méplat périphérique, sans apport extérieur substantiel de chaleur,
d) maintenir le film au contact du méplat périphérique et simultanément chauffer film et méplat à une température suffisante pour opérer leur solidarisation mutuelle par thermoscellage, et
e) libérer l'article recouvert du film thermoscellé.

2. Procédé selon la revendication 1, **caractérisé en ce que** l'étape d) comprend également le chauffage de l'intervalle compris entre la région centrale et le méplat périphérique à une température suffisante pour tendre la partie de film (48) s'étendant librement dans cet intervalle.

3. Procédé selon la revendication 1, **caractérisé en ce que** l'étape e) est suivie d'une étape de découpe du film autour de l'article pourvu du film thermoscellé.

4. Machine de formage d'un film plastique (40) et de thermoscellage de ce film sur le pourtour d'un article (10) présentant, du côté recouvert par le film, une région centrale (12) entourée par un rebord (32) comportant un méplat périphérique (14) sur lequel est scellé à chaud le film, ce méplat s'étendant en retrait axial par rapport au plan de la région centrale, cette machine comportant :
- des moyens pour conformer au préalable le film en une forme concave avec des zones conjuguées de la région centrale et du rebord de l'article, et
- des moyens pour sceller thermiquement le film sur l'article, au moins sur la région du méplat périphérique,
machine **caractérisée en ce qu'**elle comprend un poste unique comportant :
a) un support (50) pour l'article,
b) des moyens (58, 60) de placement du film, à l'état non étiré, au-dessus de la région centrale de l'article,
c) des moyens (54, 72) de maintien périphérique du film autour du méplat de l'article dans son support,
d) des moyens pour déplacer axialement le film par rapport à la pièce, propres à rapprocher le film de la région centrale jusqu'à ce que le film vienne en contact avec cette région centrale puis au-delà de la région centrale, en étirant le film dans la région du rebord située entre la région centrale et le méplat périphérique, sans apport extérieur substantiel de chaleur,
e) des moyens (62, 70) de thermoscellage, propres à maintenir le film au contact du méplat périphérique et simultanément chauffer film et méplat à une température suffisante pour opérer leur solidarisation mutuelle par thermoscellage, et
f) des moyens pour libérer hors de son support l'article recouvert du film thermoscellé.

5. Machine selon la revendication 4, **caractérisée en ce qu'**elle comprend également des moyens de chauffage de l'intervalle compris entre la région centrale et le méplat périphérique à une température suffisante pour tendre la partie de film (48) s'étendant librement dans cet intervalle.

6. Machine selon la revendication 4, **caractérisée en ce qu'**elle comprend également des moyens de découpe du film autour de l'article pourvu du film thermoscellé.

7. Article (10) recouvert d'un film (40) thermoscellé sur son pourtour, cet article présentant, du côté recouvert par le film, une région centrale (12) entourée par un rebord (32) comportant un méplat périphérique (14) sur lequel est scellé le film, ce méplat s'étendant en retrait axial par rapport au plan de la région centrale, et le film étant un film plastique conformé pour lui donner une forme concave avec des zones (42-48) conjuguées de la région centrale (12) et du rebord (32) de l'article, article **caractérisé en ce que** le matériau du film est une matière plastique étirable à froid.

8. Article selon la revendication 7, **caractérisé en ce que** le matériau du film est une matière plastique non thermofusible.

9. Article selon la revendication 7, **caractérisé en ce que** le matériau du film comprend un complexe multicouche.

10. Article selon la revendication 9, **caractérisé en ce que** le matériau du film comprend un complexe PET/PE.

11. Article selon la revendication 7, **caractérisé en ce que** la partie de film (48) s'étendant librement dans l'intervalle compris entre la région centrale (12) et le méplat périphérique (14) est une partie sous tension.
